# EUROPEAN PATENT APPLICATION

(11) **EP 4 006 433 A1**
(43) Date of publication of application: **01.06.2022**
(21) Application number: 20210541.7
(22) Date of filing: 30.11.2020
(51) Int. Cl.: F24C 15/20, F16B 5/00

(54) **EXTRACTION DEVICE AND METHOD FOR ASSEMBLING A VENTILATION SYSTEM**

(71) Applicant: ELECTROLUX APPLIANCES AKTIEBOLAG, 105 45 Stockholm (SE)
(72) Inventor: PUOTI, Eduardo, 47122 Forli (IT); PATIL, Lokesh, 47122 Forli (IT)
(74) Representative: Electrolux Group Patents

(57) **Abstract**

An extraction device (14) for removing air from an area above a cooking hob (12) comprises a component (36, 28) to be assembled, in particular a ventilation system (36, 42) for sucking-in the air from the area above the cooking hob (12). According to the invention, the component (36, 28) to be assembled is fixed to or connected to a frame part or a housing part of the extraction device (14), or to a suspension device (54), which forms a mounting fixture for the extraction device (14). The fixation is performed by means of at least one sliding flap (60) or bracket, which engages behind an edge region of the frame part or housing part or of the suspension device (54).

Further, a method for assembling a component (36, 28) in an extraction device is disclosed. The assembly of the component (36, 28) comprises a first assembly movement including docking a contact surface of the component (36, 28) to be assembled at a contact surface of a frame part or a housing part of the extraction device (14), or at a suspension device (54), which forms a mounting fixture for the extraction device (14). The assembly further comprises a subsequent second assembly movement including moving at least one sliding flap (60) or bracket behind an edge region of the frame part or housing part or of the suspension device (54).

## Description

The present invention relates to an extraction device for removing air from an area above a cooking hob according to the preamble of claim 1. The present invention further relates to a method for assembling a ventilation system in an extraction device according to the preamble of claim 12.

During the performance of cooking activities under use of a cooking hob, cooking fumes or vapours are generated, which are distributed over the cooking area. In order to avoid these cooking fumes or vapours to be spread throughout the entire kitchen space, an arrangement of an extraction device, particularly an extractor hood, is common. Said extraction device is usually operated in parallel to the cooking hob, thereby sucking in those cooking fumes or vapours in order to filter out particles and tiny droplets from the fumes or vapours and/or to blow filtered air to the outside of the building. While it has been common to arrange such an extractor hood above the cooking area, in recent years downdraft extraction devices have been finding a growing market. Such kind of extraction device is usually arranged below a worktop of the related cooking hob, thereby forming a combination appliance by merging a common cooking hob with an extraction device or module for cooking fumes or vapours extraction. In order to provide a combination appliance with low installation height, it is known to directly arrange the extraction device beneath the cooking hob, in particular to attach the extraction device or specific components thereof at a bottom part of the cooking hob. Said extraction device or module comprises different components, particularly at least one ventilation system for sucking air, specifically the cooking fumes or vapours, from the cooking area through an opening or recess arranged in the worktop.

The fixation of the different components of the extraction device, in particular of the ventilation system, is commonly performed by screws, specifically with a screwing performed from an interior of the cooking hob. Such a fixation, however, requires specific mounting equipment in the related assembly line and, what is more, leads to a complicated and an elaborate servicing of the extraction device, especially in case of repair works on a motor driving a fan of the ventilation system.

It is an object of the present invention to provide an extraction device comprising a component to be assembled, which assembly shall be executable with a low installation complexity. In addition, a method for assembling a component of an extraction device with simplified assembly steps shall be provided.

The object is achieved by an extraction device for removing air from an area above a cooking hob, which extraction device comprises a component to be assembled, in particular a ventilation system, which is suitable or provided for sucking-in the air from the area above the cooking hob. According to the present invention, the component to be assembled, in particular the ventilation system, is fixed to a frame part or a housing part of the extraction device or to a suspension device, which forms a mounting fixture for the extraction device. The fixation is performed by means of at least one sliding flap or bracket, which engages behind an edge of the frame part or housing part or of the suspension device.

Said edge region may be an edge zone of a cutout of the frame part or housing part or of the suspension device. Moreover, the suspension device may be connected with or may represent a constructional part, preferably a lower or bottom part or bottom surface, e.g. a lower or bottom surface or housing wall, of the cooking hob.

The extraction device may include an inlet opening, which is suitable or provided for an air intake into an interior of the extraction device. Similarly, a conduction means may be included, which is suitable or provided for conducting the air through the interior of the extraction device. For example, the conduction means is an air duct. The ventilation system, which preferably comprises a motor, a fan propeller and a fan housing, may be arranged in or may be in operative connection with the conduction means. Further, in addition or as an alternative, the extraction device may include an outlet opening, which is suitable or provided for exhausting air. Said exhaustion may take place into room air or ambient air.

The extraction device is particularly an extraction hood and, specifically, it is a downdraft extraction hood and/or it forms a combination appliance in assembly with the cooking hob. The air especially comprises cooking vapours. The air, or the cooking fumes or vapours, respectively, may comprise fluid particles, which may be any type of particles having a liquid physical state, but particularly water particles or droplets and/or grease or oil particles are included. Additionally or alternatively, solid particles may be comprised in the air.

Furthermore, a filter element is preferably arranged in the extraction device, particularly at or downstream the inlet opening, the filter element especially being or comprising a grease filter element, preferably a mesh filter. With such kind of usually easy to clean filter element, quite a number of particles, especially grease particles, are filtered out. Favourably, the extraction device comprises a carbon filter element, which may be implemented as an odour filter means.

One specific embodiment of the present invention is characterized in that the component to be assembled is implemented in the extraction device in a hanging arrangement. Preferably, the component to be assembled is suspended from an upper frame part or upper housing part of the extraction device or from the suspension device arranged above the component.

The upper frame part or housing part or the suspension device is preferably arranged beneath, in particular directly beneath, the cooking hob.

According to embodiments, the component to be assembled is fixed or connected by at least two sliding flaps or brackets, preferably by at least three sliding flaps or brackets positioned remote from one another. Such remote arrangement with a plurality of sliding flaps or brackets, advantageously with largest possible distance from each other, provides for a particularly stable connection.

If the component to be assembled may be mountable by a rotational movement, e. g. because of an at least essentially circular design thereof, the fixation or connection of the component to be assembled may comprise at least one bayonet fastening means. More specifically, the component comprises a plurality of bayonet fastening means, which are arranged on a circle line around a centre point. In the case of the component being a ventilation system of the extraction device, such kind of centre point may be a motor shaft of the fan.

According to embodiments, the sliding flap or bracket comprises at least one embossment, which is arranged at a surface of the sliding flap or bracket that faces the edge region. Preferably, the embossment is or comprises at least one rib, which rib may have a longitudinal axis in sliding direction for establishment of fixation or connection.

In order to provide a steady fixation or connection, at least in an end position of the sliding assembly movement a friction connection or clamping connection between the sliding flap or bracket and the edge region may be performed. To this end, the at least one embossment, particularly the at least one rib, favourably increases in height in sliding direction for establishment of fixation or connection.

The stability of the fixation or connection may be further increased by means of at least one locking means, which is included for preventing unintended disengagement of the sliding flap or bracket from its fixation or connection with the edge region of the frame part or housing part or of the suspension device. Said at least one locking means may be a pin, a screw, a rivet or a bolt, which is preferably implemented in overlapping openings arranged both in the component to be assembled and in the frame part or housing part or in the suspension device.

One embodiment provides for at least one locking means, which is formed by or which comprises a self-locking mechanism implemented in or acting on the sliding flap or bracket or which is established by interlocking the sliding flap or bracket in its position of fixation or connection. A specifically preferred embodiment is characterized in that the at least one locking means is established by interlocking the sliding flap or bracket in its position of fixation or connection, in particular established by bending, in particular of about 90 degrees, a free end of the sliding flap or bracket alongside a contact surface arranged behind an edge region of the frame part or housing part or of the suspension device.

The object is also achieved by a method for assembling a component in an extraction device, which component may be a ventilation system for removing air, e. g. being or including cooking vapours, from an area above a cooking hob. According to the invention, the assembly of the component comprises a first assembly movement and a subsequent second assembly movement. The first assembly movement includes a docking of a contact surface of the component to be assembled at a contact surface of a frame part or a housing part of the extraction device, or at a suspension device, which forms a mounting fixture for the extraction device. The subsequent second assembly movement includes a movement of at least one sliding flap or bracket behind an edge region of the frame part or housing part or of the suspension device. The fixation or connection may be finalized at the end of the second movement. The edge region is preferably an edge zone of a cutout of the frame part or housing part or of the suspension device.

The extraction device, which may be an extraction device according to anyone of the above-described embodiments, is particularly an extraction hood, more particularly a downdraft extraction hood. Moreover, the extraction device may form a combination appliance in assembly with the cooking hob.

One embodiment of the method according to the present invention is characterized in that the second assembly movement is a straight movement or a rotational movement, in particular for establishing a bayonet fastening.

For a stable fixation or connection, which is favourably free of play, a friction connection or clamping connection between the sliding flap or bracket and the edge region is performed at least in an end position of the sliding assembly movement and preferably gradually built up during the sliding process.

More specifically, a locking means is included or activated after completion of the second assembly movement in order to prevent an unintended disengagement of the sliding flap or bracket from its fixation or connection with the edge region of the frame part or housing part or of the suspension device.

Novel and inventive features of the present invention are set forth in the appended claims.

The present invention will be described in further detail with reference to the drawing, in which
- Fig. 1: is a perspective view of a combination appliance comprising a cooking hob and a downdraft extraction device installed in a kitchen cabinet;
- Fig. 2: is a cross-sectional perspective view of the disassembled combination appliance of Fig. 1 with a frontal surface cut away;
- Fig. 3: is a rear view of the combination appliance of Fig. 2;
- Fig. 4: is a bottom view of an extraction fan of the extraction device fixed to a bottom surface of the cooking hob;
- Fig. 5: is an enlarged detail view of a sliding fixation mechanism according to detail V in Fig. 4;
- Fig. 6: illustrates the sliding fixation mechanism of Fig. 5 in a disengaged state;
- Fig. 7: is a bottom view of a casing of the extraction device fixed to the bottom surface of the cooking hob;
- Fig. 8: is an enlarged detail view of a sliding fixation mechanism according to detail VIII in Fig. 7;
- Fig. 9: is an enlarged detail view of an example for an interlocking mechanism preventing disengagement; and
- Fig. 10: is the interlocking mechanism of Fig. 9 with a free end of a slip-in feature bent for interlocking purposes.

In all figures the same or equivalent part are marked with the same reference numbers.

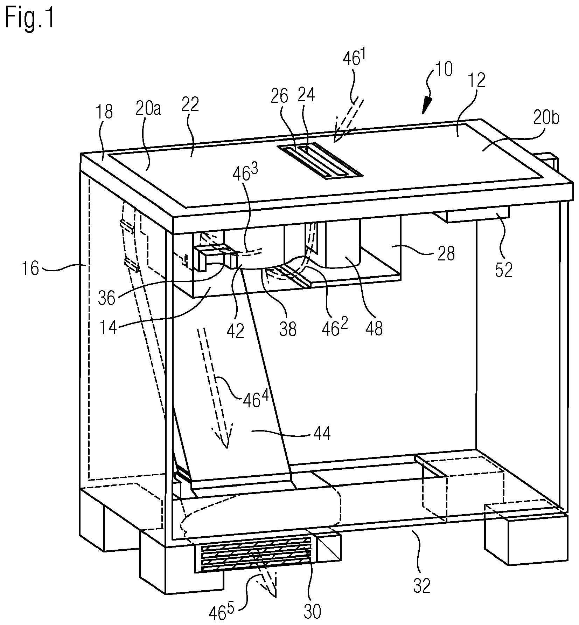

Fig. 1 illustrates a combination appliance 10 comprising a cooking hob 12 and a downdraft extraction device 14 installed in a kitchen cabinet 16. The cooking hob 12 is installed in a cutout of a kitchen countertop 18 forming a top cover plate of the kitchen cabinet 16. The downdraft extraction device 14 is configured to take away cooking vapours occurring during cooking processes, in particular when cooking with uncovered cookware. The cooking hob 12 comprises cooking regions 20a, 20b arranged on a left half and a right half of a worktop 22 of the cooking hob 12, which left and right halves are separated from each other by a suction opening 24 for an intake of the cooking vapours, the suction opening 24 being arranged alongside a worktop centreline. The suction opening 24 is covered by a cover grid 26 for preventing items, e.g. cookware, to fall into the suction opening 24.

A casing 28 of the extraction device 14 is shown in Fig. 1 in transparent illustration. Said casing 28 provides a closed outer shell or first channel for a flow of the sucked-in cooking vapours on their way from the suction opening 24 to an exhaust opening 30 in a base area 32 of the kitchen cabinet 16. Said exhaust opening 30 is also covered, namely by an outlet grille 34.

The flow of the sucked-in cooking vapours through the extraction device 14 is driven by the operation of an extraction fan 36 arranged inside of the casing 28. Said extraction fan 36 comprises a bottom-sided intake opening 38 for sucking the cooking vapours from the interior space of the casing 28.

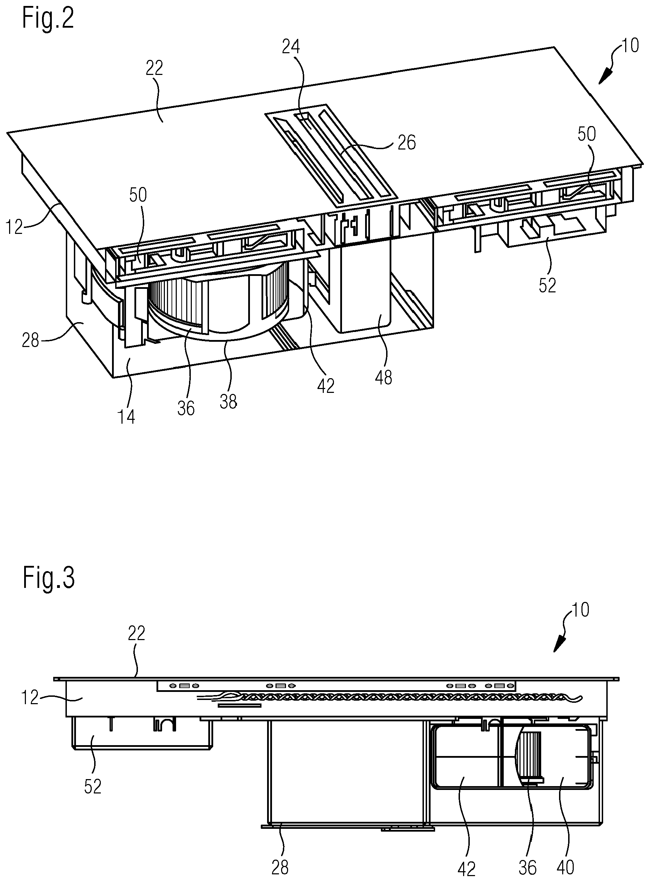

As illustrated by Fig. 3, which is a rear view of the combination appliance 10, a rear-sided fan outlet 40 is arranged for a horizontal exit of the air blown out backwards from the extraction fan housing 42. The fan outlet 40 is connected to a first end of an air duct 44 designed as a rectangular tube and forms a second channel arranged downstream the above-mentioned first channel. Directly at the passage from the fan outlet 40 to the air duct 44, an air duct bending by 90 degrees is implemented, which redirects the air flow from horizontal to vertical downwards. The air duct 44 may be guided alongside a rear side of the kitchen cabinet 16 and may be bent again by 90 degrees close to a rear lower edge of the kitchen cabinet 16 in order to direct the airflow towards exhaust opening 30 in the base area 32 of the kitchen cabinet 16. Accordingly, the second end of the air duct 44 is connected to the exhaust opening 30. The embodiment illustrated in Fig. 1 shows a solution of the air duct 44 with an inclined section of its downwardly directed portion, directed slightly to the right. Naturally, a solution with said portion arranged in an exact vertical direction is considerable as well.

The course of the cooking vapours from the cooking area through the extraction device 14 to a re-entry into room air is illustrated in Fig. 1 by dotted arrows 46¹ to 46⁵. On their way through the extraction device 14, the cooking vapours pass through a filter assembly 48, which is arranged downstream directly behind the suction opening 24.

The cross-sectional view of Fig. 2 further shows two power boards 50, one for the left cooking region 20a and one for the right cooking region 20b, the power boards 50 providing cooking zones in the left and right cooking regions 20a, 20b with electrical power. In the present embodiment, the cooking hob 12 is an induction cooking hob and the cooking zones are defined by induction coils that are arranged below the worktop 22 of the cooking hob 12. Attached to the bottom side of the power board 50 assigned to the right cooking region 20b, a further circuit board is arranged forming a control electronics 52 for the combination appliance 10.

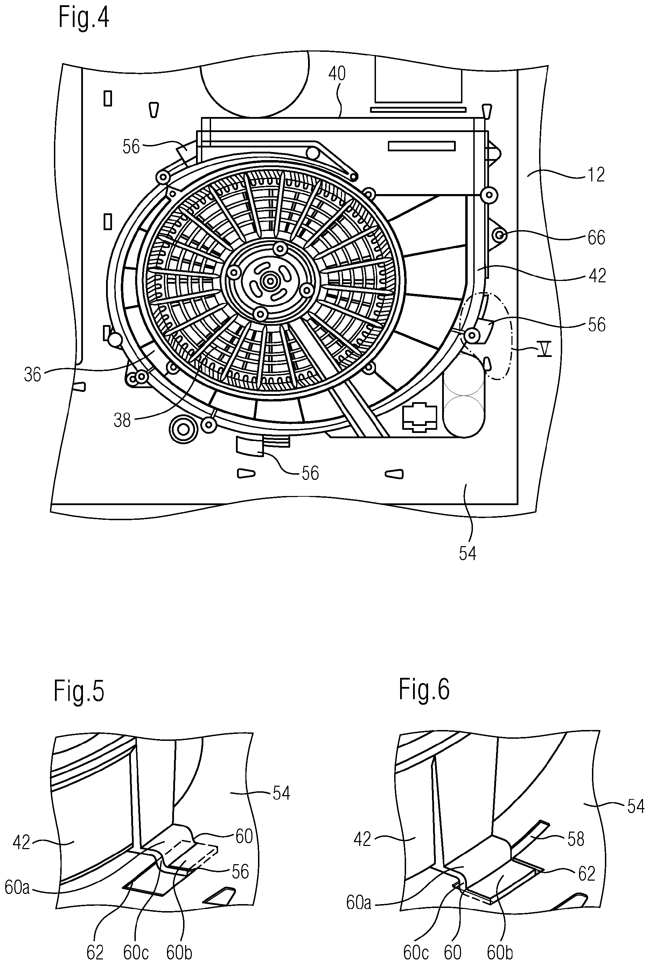

Fig. 4 illustrates a bottom view of the extraction fan 36, i. e. looked from below at the extraction device 14 in the interior of the kitchen cabinet 16, however, with removed bottom wall of the casing 28 of the extraction device 14. The extraction fan 36, more specifically its fan housing 42, is mounted at a bottom wall 54 of the cooking hob 12 by means of three fastening devices 56 arranged at a distance from each other at the fan housing 42. The bottom wall 54 is formed by a metal sheet with a number of cutouts implemented therein. The fan housing 42 may be made of metal, preferably however, the housing is realized in plastic. The three fastening devices 56 establish a bayonet fastening, so that the fixation of the fan housing 42 at the bottom wall 54 is performed in a bayonet coupling including a short rotation movement finalizing the fastening process. The rotation movement is executed counterclockwise, when looking towards the extraction fan 36 as in Fig. 4.

One of the fastening devices 56 is illustrated in more detail by the enlarged view according to Fig. 5. A stepped flap 60 protrudes from the curved fan housing 42 in radial direction forming a mounting tongue, wherein the stepped design of the flap 60 passes from a first portion 60a, which is flush on its bottom side with the contact surface of the fan housing 42 contacting the bottom wall 54 of the cooking hob 12, into a second portion 60b, which is set deeper compared to the first portion 60a in a terraced way. The difference in height between first and second portions 60a, 60b corresponds with the sheet metal thickness of the hob bottom wall 54. That way, the second portion 60b is configured to reach behind the surface of the bottom wall 54 that is opposite the surface supporting the fan housing 42.

Fig. 5 illustrates the fastening device 56 in its fixation position like in Fig. 4. An intermediate portion 60c of the stepped flap 60 interlinking the first and second portions 60a, 60b penetrates a slot 58 in the bottom wall 54 of the cooking hob 12, so that the second portion 60b is arranged on the reverse side of the bottom wall 54, forming a hooking of the fan housing 42 in said slot 58. That way, a lift-off of the fan housing 42 from the bottom wall 54 is prevented.

By Fig. 6 a released or unmounted condition of the fastening device 56 is shown. The fan housing 42 is rotated back clockwise from its fixation position, illustrated by Fig. 5, so that the intermediate portion 60c is moved outside of the slot 58 into a lead-in opening 62 of the bottom wall 54, which releases the second portion 60b, and, consequently, the entire fan housing 42 can be lift off. To this end, the lead-in opening 62 is slightly more extensive than the second portion 60b in order to enable a facilitated insertion of the second portion during the assembly process in the production line as well as an easy disassembling for servicing activities.

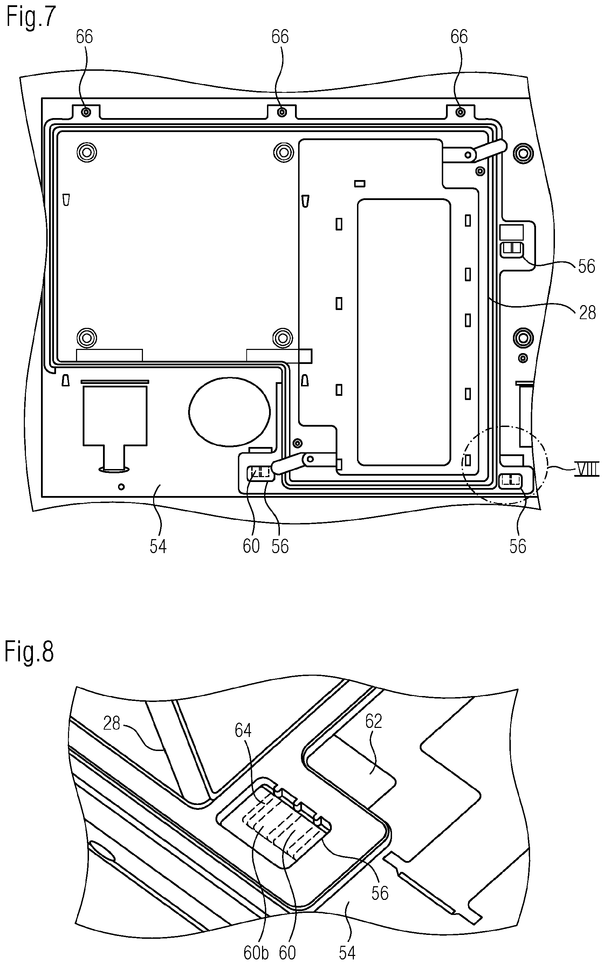

Fig. 7 illustrates another example for the fastening device 56 according to the invention, by which a bottom view of the casing 28 of the extraction device 14 fixed to the bottom wall 54 of the cooking hob 12 is shown. Also this fastening device 56 for the casing 28 includes a stepped flap 60, so that a second portion 60b thereof is configured to reach behind the surface of the bottom wall 54 that is opposite the surface supporting the casing 28. Similar to the fixation of the fan housing 42, also the fixation of the casing 28 is established by three fastening devices 56. However, contrary to the fixation of the fan housing 42, the casing 28 is assembled by a straight fixation movement, i. e. the second portion 60b of the stepped flap 60 is inserted in a related lead-in opening 62 and the entire casing 28 is rectilinearly moved, so that the second portion 60b reaches behind the reverse side of the bottom wall 54, forming a hooking of the casing 28 in order to prevent a lift-off of the casing 28 from the bottom wall 54.

The enlarged detail view according to Fig. 8 further illustrates the contact surface of the second portion 60b of the stepped flap 60 comprising three ribs 64 touching the reverse side of the bottom wall 54. Said ribs 64 are arranged not only for a reinforcement of the second portion 60b, but also perform a gradually increasing clamping effect between fastening device 56 and the sheet metal of the bottom wall 54 during the assembly movement. To this end, the height of the ribs 64 increases in the direction of assembly movement.

In order to prevent an unintended disengagement of the fastening devices 56, e. g. during a shipment of the combination appliance 10, both the fan housing 42 and the casing 28 are secured by means of a locking pin 66 or by a plurality of locking pins 66, which are inserted in openings arranged both in the bottom wall 54 and in the fan housing 42 or casing 28, respectively. In their fixation positions of the fan housing 42 and the casing 28 said openings overlap each other and an insertion of the locking pins 66 is enabled.

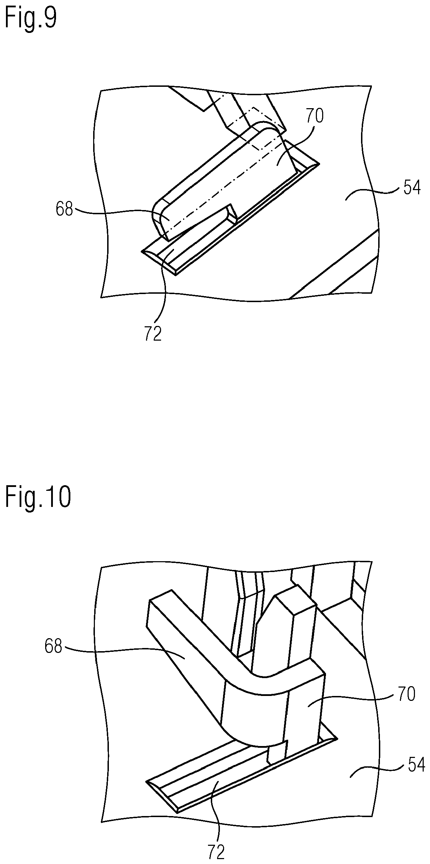

Figs. 9 and 10 illustrate a different solution for a locking mechanism. The locking means for preventing unintended release of the fan housing 42 or of the casing 28 is defined by a free end 68 of a slip-in feature 70, which protrudes from the fan housing 42 or from the casing 28, respectively, and which is inserted in a related opening 72 in the bottom wall 54 during the assembly of the fan housing 42 or the casing 28. After finalizing the fixation or connection movement, the free end 68 is bent away from the opening 72 alongside the surface of the bottom wall 54 by about 90 degrees, so that an interlocking is generated and an unintended release or disengagement of the fan housing 42 or the casing 28 is prevented.

Although illustrative embodiments of the present invention have been described herein with reference to the accompanying drawings, it is to be understood that the present invention is not limited to these precise embodiments, and that various other changes and modifications may be affected therein by one skilled in the art without departing from the scope or spirit of the invention. All such changes and modifications are intended to be included within the scope of the invention as defined by the appended claims.

### List of reference numerals

- 10: combination appliance
- 12: cooking hob
- 14: downdraft extraction device
- 16: kitchen cabinet
- 18: kitchen countertop
- 20a,20b: cooking regions
- 22: worktop
- 24: suction opening
- 26: cover grid
- 28: casing
- 30: exhaust opening
- 32: base area
- 34: outlet grille
- 36: extraction fan
- 38: intake opening
- 40: fan outlet
- 42: fan housing
- 44: air duct
- 46^{1 to 5}: arrows indicating air flow
- 48: filter assembly
- 50: power boards
- 52: control electronics
- 54: hob bottom wall
- 56: fastening device
- 58: slot
- 60: stepped flap
- 60a: first portion
- 60b: second portion
- 60c: intermediate portion
- 62: lead-in opening
- 64: rib
- 66: locking pin
- 68: free end
- 70: slip-in feature
- 72: opening

## Claims

1. An extraction device (14), in particular an extraction hood, for removing air, specifically cooking vapours, from an area above a cooking hob (12), the extraction device (14) particularly being a downdraft extraction hood and/or particularly forming a combination appliance (10) in assembly with the cooking hob (12), the extraction device (14) comprising a component (36, 28) to be assembled, in particular a ventilation system (36, 42) for sucking-in the air from the area above the cooking hob (12), the ventilation system (36, 42) particularly comprising a motor, a fan propeller and a fan housing (42),
**characterized in that**
the component (36, 28) to be assembled, in particular the ventilation system (36, 42), is fixed to or connected to
- a frame part or a housing part of the extraction device, or
- a suspension device (54), which forms a mounting fixture for the extraction device (14),
by means of at least one sliding flap (60) or bracket, which engages behind an edge region of the frame part or housing part or of the suspension device (54), the edge region preferably being an edge zone of a cutout (58, 62) of the frame part or housing part or of the suspension device (54).

2. The extraction device (14) according to claim 1,
**characterized in that**
the component (36, 28) to be assembled is implemented in the extraction device (14) in a hanging arrangement, preferably suspended from an upper frame part or upper housing part of the extraction device or from the suspension device (54) arranged above the component (36, 28) to be assembled.

3. The extraction device (14) according to claim 1 or 2,
**characterized in that**
the suspension device (54) is a constructional part, preferably a lower or bottom surface or wall (54), of the cooking hob (12).

4. The extraction device (14) according to anyone of the preceding claims,
**characterized in that**
the upper frame part or housing part or the suspension device (54) is arranged beneath, in particular directly beneath, the cooking hob (12).

5. The extraction device (14) according to anyone of the preceding claims,
**characterized in that**
the component (36, 28) to be assembled is fixed or connected by at least two sliding flaps (60) or brackets, preferably by at least three sliding flaps (60) or brackets positioned remote from one another.

6. The extraction device (14) according to anyone of the preceding claims,
**characterized in that**
the fixation or connection of the component (36, 28) to be assembled comprises at least one bayonet fastening means.

7. The extraction device (14) according to anyone of the preceding claims,
**characterized in that**
the sliding flap (60) or bracket comprises at least one embossment, preferably at least one rib (64), arranged at the surface of the sliding flap (60) or bracket facing the edge region.

8. The extraction device (14) according to claim 7,
**characterized in that**
the at least one embossment, particularly the at least one rib (64), increases in height in sliding direction for establishment of fixation or connection.

9. The extraction device (14) according to anyone of the preceding claims,
**characterized in that**
at least one locking means (66, 68) is included for preventing unintended disengagement of the sliding flap (60) or bracket from its fixation or connection with the edge region of the frame part or housing part or of the suspension device (54) .

10. The extraction device (14) according to claim 9,
**characterized in that**
the at least one locking means (66) is a pin, a screw a rivet or a bolt, which is preferably implemented in overlapping openings arranged both in the component (36, 28) to be assembled and in the frame part or housing part or in the suspension device (54).

11. The extraction device (14) according to claim 9 or 10,
**characterized in that**
the at least one locking means (66, 68)
- is formed by or comprises a self-locking mechanism implemented in or acting on the sliding flap (60) or bracket, or
- is established by interlocking the sliding flap (60) or bracket in its position of fixation or connection, in particular established by bending, in particular of about 90 degrees, a free end (68) of the sliding flap (60) or bracket alongside a contact surface arranged behind an edge region of the frame part or housing part or of the suspension device (54).

12. A method for assembling a component (36, 28) of an extraction device (14), in particular of an extraction hood, the component (36, 28) in particular being a ventilation system (36, 42) for removing air, specifically cooking vapours, from an area above a cooking hob (12), the extraction device (14) particularly being a downdraft extraction hood and/or particularly forming a combination appliance (10) in assembly with the cooking hob (12),
**characterized in that**
the assembly of the component (36, 28), in particular the ventilation system (36, 42), comprises
a first assembly movement including docking a contact surface of the component (36, 28) to be assembled
- at a contact surface of a frame part or a housing part of the extraction device (14), or
- at a suspension device (54), which forms a mounting fixture for the extraction device (14),
and a subsequent second assembly movement including moving at least one sliding flap (60) or bracket behind an edge region of the frame part or housing part or of the suspension device (54), wherein the edge region is preferably an edge zone of a cutout (58, 62) of the frame part or housing part or of the suspension device (54).

13. The method according to claim 12,
**characterized in that**
the second assembly movement is a straight movement or a rotational movement, in particular for establishing a bayonet fastening.

14. The method according to claim 12 or 13,
**characterized in that**
at least in an end position of the sliding assembly movement a friction connection or clamping connection between the sliding flap (60) or bracket and the edge region is performed.

15. The method according to anyone of the claims 12 to 14,
**characterized in that**
after completion of the second assembly movement, a locking means (66, 68) is included or activated for preventing unintended disengagement of the sliding flap (60) or bracket from its fixation or connection with the edge region of the frame part or housing part or of the suspension device (54).
